# EUROPÄISCHE PATENTANMELDUNG

(11) **EP 4 497 311 A1**
(43) Veröffentlichungstag der Anmeldung: **29.01.2025**
(21) Anmeldenummer: 24187212.6
(22) Anmeldetag: 08.07.2024
(51) Int. Cl.: A01B 76/00, G06F 21/44, G06F 21/62

(54) **VERFAHREN ZUR DATENBEHANDLUNG BETREFFEND EINE LANDMASCHINE**

(30) Priorität: 24.07.2023 DE 102023119507
(71) Anmelder: KRONE Agriculture SE, 48480 Spelle (DE); Lemken GmbH & Co KG, 46519 Alpen (DE)
(72) Erfinder: Müter, Matthias, 53179 Bonn (DE); Lerch, Christian, 48432 Rheine (DE); Röttgermann, Sebastian, 47608 Kapellen an der Fleuth (Geldern) (DE); Westphal, Steffen, 49328 Melle (DE); Schoofs, Dominik, 47589 Uedem (DE)
(74) Vertreter: Engelmann, Kristiana

(57) **Zusammenfassung**

Die Erfindung betrifft ein Verfahren zur Datenbehandlung betreffend eine Landmaschine (10), wobei über wenigstens eine Benutzerschnittstelle (30-33) ein Zugriff auf Daten (D) ermöglicht wird, die im Zusammenhang mit dem Betrieb der Landmaschine (10) stehen. Um die Behandlung von Daten, die eine Landmaschine betreffen, zu verbessern, ist erfindungsgemäß vorgesehen, dass ein Datensystem (20) automatisch personenspezifisch festlegt, welcher Zugriff einer Person (40-43) ermöglicht wird.

## Beschreibung

Die vorliegende Erfindung betrifft ein Verfahren zur Datenbehandlung betreffend eine Landmaschine, nach dem Oberbegriff von Anspruch 1, ein Datensystem nach Anspruch 15 sowie eine Landmaschine nach Anspruch 16.

Moderne Landmaschinen sind überwiegend entweder als Selbstfahrer mit eigenen Fahrantrieb ausgestattet oder als Anhänger dazu vorgesehen, von einem Schlepper gezogen zu werden. Neben Selbstfahrern, die von einem Fahrer gesteuert werden, werden in Zukunft auch autonome Fahrzeuge an Bedeutung gewinnen, die sich während des Feldeinsatzes zumindest zeitweise selbst steuern, ohne auf Eingaben eines Fahrers angewiesen zu sein. Der Einsatz der Landmaschine sowie ihr aktueller Zustand lassen sich durch verschiedene Daten beschreiben. Hierzu zählen Betriebsparameter wie Motordrehzahlen oder Drehmomente, aber auch Daten, die Fahrtrouten oder Ertragskarten entsprechen, ebenso sowie Parameter, die eine Betriebsstörung anzeigen, Diagnosedaten etc. Die jeweiligen Daten können zum Beispiel direkt an der Landmaschine abgelesen oder über ein zeitweise angekoppeltes Endgerät ausgelesen werden. Neben einem Auslesen von Daten können einige Daten auch verändert, also überschrieben werden. Um beispielsweise eine Betriebsstörung zu beheben, muss eine qualifizierte Person Zugriff auf die diesbezüglichen Daten haben. In vielen Fällen ist dies nicht die Person, die beim Auftreten der Betriebsstörung bei der Landmaschine ist, zum Beispiel der Fahrer oder Benutzer. Unter Umständen weiß diese Person nicht einmal, wer informiert werden müsste. Eine ähnliche Situation kann sich auch ergeben, wenn eine Servicewerkstatt versucht, eine Betriebsstörung zu beheben, aber in einigen Fällen den Hersteller hinzuziehen müsste. Unabhängig vom Auftreten einer Betriebsstörung und der hierbei relevanten Frage, wer informiert werden muss und Zugriff auf bestimmte Daten erhalten muss, ist auch relevant zu entscheiden, wer Zugriff auf bestimmte Daten erhalten darf. Das heißt eine bestimmte Person darf und muss auf Daten zugreifen, die für ihre Aufgabe wesentlich sind. Andere Daten hingegen sollten vor Veränderung oder sogar vor Ansicht durch diese Person geschützt werden. So sollten Daten, die das Lenksystem betreffen, vom Benutzer allenfalls eingesehen, nicht jedoch verändert werden dürfen, während andererseits Daten, die eine Ertragskarte repräsentieren, vom Benutzer eingesehen (und bei Bedarf verändert) werden müssen, während zum Beispiel der Hersteller oder ein Servicemitarbeiter nicht hierauf zugreifen können sollte.

Aufgabe der Erfindung ist es, die Behandlung von Daten, die eine Landmaschine betreffen, zu verbessern.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren zur Datenbehandlung betreffend eine Landmaschine geschaffen, wobei über wenigstens eine Benutzerschnittstelle ein Zugriff auf Daten ermöglicht wird, die im Zusammenhang mit dem Betrieb der Landmaschine stehen.

Statt von einer Datenbehandlung, also einer Behandlung von Daten, kann man auch von Umgang mit Daten sprechen. Dabei geht es vor allen Dingen um die Zugänglichmachung sowie den Schutz von Daten. Der Begriff "Daten" bezieht sich hier allgemein auf Informationen beliebigen Inhalts, die in aller Regel digital gespeichert und/oder übertragen werden. Bei der Landmaschine kann es sich um grundsätzlich jede Art von Maschine handeln, die bei einer Feldbearbeitung eingesetzt werden kann. Dies betrifft sowohl eine Maschine, die die eigentliche Feldbearbeitung vornimmt, beispielsweise einen Mähdrescher, Feldhäcksler, Schwader oder dergleichen, als auch einen Schlepper, der zwar nicht selbst die Feldbearbeitung vornimmt, aber die entsprechende bearbeitende Maschine als Anhänger zieht. Die Landmaschine kann über einen eigenen Fahrantrieb verfügen oder dazu vorgesehen sein, gezogen zu werden.

Es wird bei dem Verfahren über wenigstens eine Benutzerschnittstelle ein Zugriff auf Daten ermöglicht. Die Benutzerschnittstelle kann zur Dateneingabe und/oder Datenausgabe ausgebildet sein. Die Benutzerschnittstelle kann zum Beispiel ein Smartphone, ein Tablet, ein Laptop oder Desktop-Computer sein, aber auch ein Endgerät, das speziell für den Datenzugriff im Zusammenhang mit der Landmaschine gebaut wurde. Die Datenausgabe erfolgt bevorzugt optisch, beispielsweise auf einem Bildschirm, zumindest ergänzend ist aber auch eine akustische Datenausgabe denkbar. Der Zugriff auf Daten kann sich in diesem Zusammenhang auf ein Lesen und/oder ein Schreiben von Daten beziehen.

Genauer gesagt wird ein Zugriff auf Daten ermöglicht, die im Zusammenhang mit dem Betrieb der Landmaschine stehen. Die Daten können sich auf die Landmaschine selbst beziehen, zum Beispiel auf ihren aktuellen Betriebszustand. Hierzu zählen Betriebsparameter wie Motordrehzahlen oder Drehmomente, hydraulischer oder pneumatischer Druck, Stromstärke oder Spannung etc. Es kann sich auch um Parameter handeln, die einer Einstellung der Landmaschine entsprechen, zum Beispiel wie empfindlich ein Lenksystem auf Lenkkommandos reagiert. Des Weiteren kann es sich um Parameter handeln, die eine Betriebsstörung anzeigen, Diagnosedaten etc. In diesem Zusammenhang können Daten auch einer Mitteilung oder Nachricht entsprechen, beispielsweise dass eine bestimmte Komponente der Landmaschine ausgefallen ist. Die Daten müssen sich allerdings nicht unmittelbar auf die Landmaschine beziehen. Sie könnten sich auch auf das Feld oder den Bearbeitungsbereich beziehen, in dem die Landmaschine eingesetzt wird, wobei sie zum Beispiel einer Ertragskarte entsprechen können oder einer Fahrroute, die die Landmaschine durchfahren hat oder durchfahren soll.

Erfindungsgemäß ist vorgesehen, dass ein Datensystem automatisch personenspezifisch festlegt, welcher Zugriff einer Person ermöglicht wird. "Personenspezifisch" bedeutet, dass die Festlegung für unterschiedliche Personen unterschiedlich erfolgt. Das heißt das Datensystem legt fest, dass unterschiedliche Personen unterschiedliche Zugriffsmöglichkeiten erhalten. Die oben genannte Benutzerschnittstelle kann Teil des Datensystem sein, kann aber auch permanent oder zeitweise mit dem Datensystem in Verbindung stehen, ohne Teil desselben zu sein. Das Datensystem kann wenigstens teilweise hardwaremäßig implementiert sein, bevorzugt ist es wenigstens teilweise softwaremäßig implementiert. Es kann auf und/oder mittels einer physisch zusammenhängenden Hardware implementiert sein, oder aber auf einer Mehrzahl von physisch getrennten Hardwarekomponenten, die beispielsweise drahtlos miteinander kommunizieren können.

Die Daten können im Datensystem selbst abgelegt sein, sie können allerdings auch außerhalb des Datensystems gespeichert sein. Insofern ist der Begriff "Datensystem" nicht dahingehend auszulegen, dass das Datensystem die Daten enthalten muss. Vielmehr deutet die Bezeichnung darauf hin, dass das System den Zugriff auf die Daten festlegt. Bevorzugt bedeutet dies, dass das Datensystem selbst den so festgelegten Zugriff ermöglicht, so dass der Zugriff gewissermaßen über das Datensystem erfolgt. Im weiteren Sinne wäre aber auch denkbar, dass das Datensystem lediglich die Information liefert, welche Person welchen Datenzugriff erhalten soll. In jedem Fall werden Daten nicht jeder Person vollumfänglich zugänglich gemacht, sondern personenspezifisch in unterschiedlichem Maße. Das heißt, einige Personen könnten überhaupt keinen Zugriff erhalten, während andere Personen einen teilweisen Zugriff erhalten könnten und wieder andere Personen einen vollumfänglichen Zugriff erhalten könnten, wobei jeweils eine Differenzierung hinsichtlich lesendem und schreibendem Zugriff möglich und im Allgemeinen auch sinnvoll ist. Dabei kann zum einen berücksichtigt werden, dass bestimmte Personen nicht auf bestimmte Daten zugreifen dürfen oder sollen, sowie zum anderen das bestimmte Daten für bestimmte Personen unwichtig sind und ihnen daher auch gar nicht zugänglich gemacht werden müssen. Der eigentliche Zugriff auf die Daten kann daran gebunden sein, dass sich die Person in einer beliebigen Weise identifiziert, zum Beispiel durch ein Passwort, einen Code, biometrische Parameter oder andere im Stand der Technik bekannte Maßnahmen.

Die Landmaschine kann wie bereits oben erwähnt ein Schlepper, eine gezogene Landmaschine oder eine selbstfahrende Landmaschine sein, welche auch eine Feldbearbeitung durchführt. Insbesondere kann die Landmaschine ein autonomes Fahrzeug sein. Dies bezeichnet ein Fahrzeug, das sich während der Feldbearbeitung wenigstens zeitweise selbst lenkt, ohne Lenkkommandos einer Person zu empfangen. Außerhalb des Feldes oder Bearbeitungsbereichs, zum Beispiel bei einer Straßenfahrt, kann das Fahrzeug manuell gelenkt werden, gezogen werden oder auf einem anderen Fahrzeug aufgeladen transportiert werden.

Bevorzugt legt das Datensystem in Abhängigkeit von der Zugehörigkeit einer Person zu einer definierten Personenkategorie fest, welcher Zugriff dieser Person ermöglicht wird. Statt von einer Personenkategorie kann man im Allgemeinen auch von einer Anwenderkategorie sprechen. Die unterschiedlichen Personenkategorien können sich zum Beispiel durch die Art ihrer Interaktion mit der Landmaschine oder durch ihre Fachkenntnisse in Bezug auf die Landmaschine unterscheiden. Insbesondere kann hinsichtlich der definierten Personenkategorien zwischen Benutzer, Eigentümer, Hersteller und/oder Servicemitarbeiter unterschieden werden. Ein Benutzer ist dabei diejenige Person, die die Landmaschine vor Ort auf dem Feld einsetzt. Dies könnte zum Beispiel der Fahrer eines Schleppers oder einer selbstfahrenden feldbearbeitenden Maschine sein. Das kann auch die Person sein, die ein autonomes Fahrzeug zum Einsatzort bringt, dort aktiviert und/oder für die Feldbearbeitung eines bestimmten Feldes programmiert. Der Benutzer ist unter Umständen nicht mit dem Eigentümer identisch, zum Beispiel weil der Benutzer für den Eigentümer arbeitet oder weil der Benutzer die Landmaschine vom Eigentümer gemietet hat. Bevorzugt werden wenigstens zwei der oben genannten vier Personenkategorien unterschieden oder auch alle vier. Es können auch zusätzlich weitere Personenkategorien unterschieden werden.

Eine Ausführungsform sieht vor, dass einer Person in Abhängigkeit von ihrer Personenkategorie ein Zugriff auf unterschiedliche Datenkategorien ermöglicht wird. D.h., die Zugehörigkeit der Person zu einer Personenkategorie bestimmt, auf welche Datenkategorie oder Datenkategorien sie Zugriff erhalten kann. Bspw. kann eine Person, die zur Personenkategorie "Benutzer" gehört, Zugriff auf eine Datenkategorie "Ertragskarten" erhalten, während sie keinen Zugriff auf eine Datenkategorie "Lenksystem" erhält. Umgekehrt kann eine Person, die zur Personenkategorie "Hersteller" oder "Servicemitarbeiter" gehört, auf die letztgenannte Datenkategorie "Lenksystem" Zugriff erhalten, während sie keinen Zugriff auf die Datenkategorie "Ertragskarten" erhält. Es sind noch weitere Datenkategorien denkbar, beispielsweise "Antrieb", "Umfelderkennung", "Sensoren" etc.

Insbesondere kann einer Person ein Auslesen von Daten und/oder ein Bearbeiten von Daten in Abhängigkeit von ihrer Personenkategorie ermöglicht werden. Das heißt es kann sowohl hinsichtlich des Auslesens von Daten als auch hinsichtlich des Bearbeitens von Daten unterschieden werden, zu welcher Personenkategorie die Person gehört. In dem oben genannten Beispiel könnte eine Person der Kategorie "Benutzer" beispielsweise in der Lage sein, Daten der Kategorie "Lenksystem" auszulesen, nicht jedoch, diese zu bearbeiten. Es wäre auch denkbar, dass eine bestimmte Personenkategorie ausschließlich Daten auslesen kann, ohne irgendwelche Daten bearbeiten zu können.

Eine vorteilhafte Ausführungsform der Erfindung ermöglicht einen verbesserten Umgang mit Betriebsstörungen der Landmaschine. Dabei ist vorgesehen, dass eine zumindest potenziell bevorstehende Betriebsstörung der Landmaschine erkannt wird, eine Entscheidungseinheit des Datensystems automatisch eine Entscheidung trifft, welche Person über die Betriebsstörung informiert werden muss, und der Person automatisch Daten zugänglich macht, durch welche sie über die Betriebsstörung informiert wird. Als Betriebsstörung wird hier jeder Zustand sowie jedes Ereignis bezeichnet, durch welches der Betrieb der Landmaschine beeinträchtigt oder verhindert wird. Eine "zumindest potenziell bevorstehende Betriebsstörung" kann eine aktuell bestehende Betriebsstörung sein oder eine Betriebsstörung, die sicher oder mit einiger Wahrscheinlichkeit bevorsteht, wenn kein Eingreifen erfolgt. Dies kann zum Beispiel dann der Fall sein, wenn ein Betriebsparameter der Landmaschine noch in einem erlaubten Bereich liegt, allerdings ungewöhnliche Schwankungen oder anderweitige Abweichungen von einem Normwert aufweist. Auch wäre bei einem festgestellten Verschleiß eines Teils oder einem niedrigen Restbestand einer Betriebsflüssigkeit mit einer bevorstehenden Betriebsstörung zu rechnen. Eine Entscheidungseinheit des Datensystems trifft automatisch eine Entscheidung, welche Person oder welche Personen informiert werden müssen. Hierbei handelt es sich insbesondere um wenigstens eine Person, die qualifiziert ist, die aktuelle Betriebsstörung zu beheben oder die bevorstehende Betriebsstörung zu verhindern. Es wäre allerdings auch beispielsweise möglich, dass ein Hersteller informiert wird, ohne in die Behebung der Betriebsstörung eingebunden zu sein, zum Beispiel um darüber informiert zu sein, mit welcher Häufigkeit eine bestimmte Betriebsstörung bei einer bestimmten Landmaschine auftritt. Die Entscheidungseinheit ist ein Teil des Datensystems und kann vollständig softwaremäßig implementiert sein. Die Entscheidung kann anhand von Daten über die Betriebsstörung beispielsweise mittels einer Nachschlagetabelle getroffen werden oder beispielsweise mittels künstlicher Intelligenz. Die Entscheidungseinheit macht der wenigstens einen zu informierenden Person automatisch Daten zugänglich, die sie über die Betriebsstörung informieren. Die entsprechenden Daten können mehr oder weniger umfangreich, detailliert und/oder spezifisch sein. Im einfachsten Fall könnten die Daten lediglich die Information beinhalten, dass eine Betriebsstörung vorliegt oder potenziell bevorsteht. Bevorzugt beschreiben die Daten wenigstens die Art der Betriebsstörung, zum Beispiel welcher Teil der Landmaschine betroffen ist, welcher Parameter von einem Sollwert oder Sollbereich abweicht etc. Die Entscheidungseinheit kann die Daten derart zugänglich machen, dass sie diese auf einer Benutzerschnittstelle, die der Person unmittelbar zugänglich ist, direkt ausgibt. Es könnte auch ein Hinweis auf der Benutzerschnittstelle ausgegeben werden, dass die Daten zugänglich sind. Der eigentliche Zugang zu den Daten könnte an eine Identifikation der Person gebunden sein. Unter Umständen kann allerdings hierauf verzichtet werden, wenn aufgrund der Umstände klar ist, dass lediglich die entsprechende Person Zugang zu der Benutzerschnittstelle hat.

Gemäß einer Ausgestaltung wird die Entscheidung durch eine auf der Landmaschine implementierte Entscheidungseinheit getroffen. Das heißt eine Hardware, die wenigstens teilweise die Entscheidungseinheit bildet, und/oder eine Hardware, auf der eine die Entscheidungseinheit repräsentierende Software läuft, ist innerhalb der Landmaschine angeordnet. Gemäß einer anderen Ausgestaltung wird die Entscheidung durch eine bezüglich der Landmaschine externe Entscheidungseinheit getroffen. D.h., Hardware der Entscheidungseinheit und/oder Hardware, auf der die Software der Entscheidungseinheit läuft, ist außerhalb der Landmaschine angeordnet. Bspw. kann die Entscheidungseinheit auf einem PC, einem Tablet oder einem Smartphone implementiert sein. Das gesamte Datensystem kann am gleichen Ort implementiert sein wie die Entscheidungseinheit, es können allerdings auch andere Teile des Datensystems an einem anderen Ort implementiert sein.

Auch wenn die Entscheidung darüber, welche Personen informiert werden, automatisch getroffen wird, kann die Betriebsstörung in unterschiedlicher Weise erkannt werden. Eine Ausgestaltung sieht vor, dass die zumindest potenziell bevorstehende Betriebsstörung automatisch durch eine Störungserkennungseinheit der Landmaschine erkannt wird. Gemäß einer anderen Ausgestaltung wird die Betriebsstörung automatisch durch ein bezüglich der Landmaschine externe Störungserkennungseinheit erkannt. Die Störungserkennungseinheit kann in beiden Fällen hardwaremäßig und/oder softwaremäßig implementiert sein. Sie kann ein Teil des Datensystem sein, sie kann allerdings auch hardwaremäßig und/oder softwaremäßig von diesem unabhängig sein. In letzterem Fall ist es vorteilhaft, wenn die Störungserkennungseinheit Daten, die die Betriebsstörung betreffen, an die Entscheidungseinheit des Datensystems übermittelt. Eine wiederum andere Ausgestaltung sieht vor, dass die wenigstens potenziell bevorstehende Betriebsstörung durch eine Person erkannt wird. In diesem Fall kann die Person Daten in das Datensystem eingeben, die der Betriebsstörung entsprechen. Diese Daten können dann die Grundlage für die Entscheidung der Entscheidungseinheit bilden.

Gemäß einer Ausführungsform entscheidet das Datensystem in Abhängigkeit von der Betriebsstörung automatisch, dass wenigstens eine Handlung von der Person vorzunehmen ist, um der Betriebsstörung entgegenzuwirken, und macht der Person Daten zugänglich, durch die sie über die vorzunehmende Handlung informiert wird. Wiederum können die Daten auf einer Benutzerschnittstelle ausgegeben werden, die der jeweiligen Person zugänglich ist. Die Entscheidung, welche Handlung vorzunehmen ist, kann beispielsweise auch von der oben genannten Entscheidungseinheit getroffen werden. Auch in diesem Fall kann die Entscheidung beispielsweise mithilfe einer Nachschlagetabelle oder mithilfe künstlicher Intelligenz getroffen werden. Die Handlung kann entweder dazu dienen, einer potenziell bevorstehende Betriebsstörung zu verhindern oder eine bestehende Betriebsstörung zu beseitigen.

Abgesehen von einer konkreten Handlungsanweisung kann das Datensystem der Person auf die Betriebsstörung abgestimmtes Informationsmaterial zugänglich machen. Das Informationsmaterial kann in Textform, in Bildform und/oder in akustischer Form vorliegen. Es kann sich beispielsweise auch um einen Film handeln. Das Informationsmaterial kann beispielsweise eine allgemeine Information enthalten, die thematisch zum Umfeld der Betriebsstörung gehört. Liegt beispielsweise eine Betriebsstörung einer Antriebseinheit vor, könnte das Informationsmaterial allgemeine Erläuterungen zu Aufbau und Funktionsweise der Antriebseinheit enthalten sowie einen Hinweis auf bekannte Fehlerquellen.

Zum einen kann das Datensystem selbst Informationsmaterial enthalten, welches es der Person zugänglich macht. Alternativ oder zusätzlich kann das Datensystem allerdings auch Informationsmaterial aus einer bezüglich des Datensystems externen Datenbank zugänglich machen. Sofern das Datensystem mit einem Netzwerk verbunden ist, insbesondere mit dem Internet, kann entsprechendes Informationsmaterial zum Beispiel verlinkt sein.

Das Datensystem kann auch eine Diagnoseeinheit aufweisen. Diese ist in der Regel softwaremäßig implementiert. Eine Person kann über eine Benutzerschnittstelle eine Anfrage an die Diagnoseeinheit stellen und eine Antwort erhalten. Die Antwort kann zum Beispiel ein Fehlercode sein, der es zumindest erlaubt, die Art und/oder Ursache der Betriebsstörung einzugrenzen und idealerweise genau zu bestimmen.

Bevorzugt wird einer Person ein Fernzugriff auf die Daten ermöglicht. Ein Fernzugriff ist dabei ein Zugriff über eine Benutzerschnittstelle, die von der Landmaschine und/oder vom Datensystem entfernt ist. Eine Verbindung mit der Benutzerschnittstelle kann über ein drahtgebundenes und/oder drahtloses Netzwerk hergestellt werden. Durch den Fernzugriff ist es möglich, dass beispielsweise ein Servicemitarbeiter oder ein Hersteller relevante Daten einsehen (und gegebenenfalls bearbeiten) können, ohne vor Ort sein zu müssen. Ein derartiger Fernzugriff kann eine Anwesenheit vor Ort ersetzen oder aber dieser vorangehen. Sofern eine Betriebsstörung behoben werden soll, muss dies natürlich nicht auf dem Feld oder auf einem Gelände des Benutzers oder Eigentümers erfolgen, sondern die Landmaschine kann auch in eine Servicewerkstatt oder zum Hersteller transportiert werden. Auch in diesen Fällen ist es allerdings unter Umständen vorteilhaft, wenn bereits im Vorfeld Daten gelesen und gegebenenfalls bearbeitet werden können.

Eine Ausführungsform sieht vor, dass bei einer zumindest potenziell bevorstehenden Betriebsstörung wenigstens zwei Personen unterschiedlicher Personenkategorien Zugriff auf Daten ermöglicht wird, wobei wenigstens eine der Personen über einen Fernzugriff auf die Daten zugreift. In diesem Fall können sich beide Personen an der Analyse und Beseitigung der Betriebsstörung beteiligen und ihre Bemühungen koordinieren. Ein Beispiel wäre, dass eine Person ein Benutzer ist, der sich in unmittelbarer Nähe der Landmaschine aufhält, während eine weitere Person ein Servicemitarbeiter sein kann, der über ein Netzwerk aus der Ferne auf die Daten zugreift. Selbstverständlich können die Personen dabei auch miteinander kommunizieren. Dies kann entweder über eine vom Datensystem unabhängige Verbindung geschehen, zum Beispiel indem die Personen miteinander telefonieren, oder das Datensystem kann eine entsprechende Kommunikation unterstützten, über eine eingebettete Chat-, Sprech- oder Videofunktion. Die Personen können auch durch die oben erwähnte Diagnoseeinheit unterstützt werden. Die Entscheidungseinheit kann entscheiden, welche Personen Zugriff erhalten müssen. Sie kann auch jeder der Personen einen Hinweis geben, dass es bei der vorliegenden Betriebsstörung sinnvoll ist, die andere(n) Person(en) mit einzubeziehen.

Die Aufgabe wird weiterhin gelöst mit einem Datensystem zur Datenbehandlung betreffend eine Landmaschine, nach Anspruch 15. Das Datensystem ist dazu eingerichtet, über wenigstens eine Benutzerschnittstelle einen Zugriff auf Daten zu ermöglichen, die im Zusammenhang mit dem Betrieb der Landmaschine stehen. Dabei ist das Datensystem erfindungsgemäß dazu eingerichtet, den Zugriff personenspezifisch zu ermöglichen.

Vorteilhafte Ausgestaltungen des erfindungsgemäßen Datensystems entsprechen denen des erfindungsgemäßen Verfahrens.

Außerdem wird die Aufgabe gelöst mit einer Landmaschine mit einem Datensystem, nach Anspruch 16. Das Datensystem ist dazu eingerichtet, über wenigstens eine Benutzerschnittstelle einen Zugriff auf Daten zu ermöglichen, die im Zusammenhang mit dem Betrieb der Landmaschine stehen. Dabei ist das Datensystem erfindungsgemäß dazu eingerichtet, den Zugriff personenspezifisch zu ermöglichen.

Vorteilhafte Ausgestaltungen der erfindungsgemäßen Landmaschine entsprechen denen des erfindungsgemäßen Verfahrens.

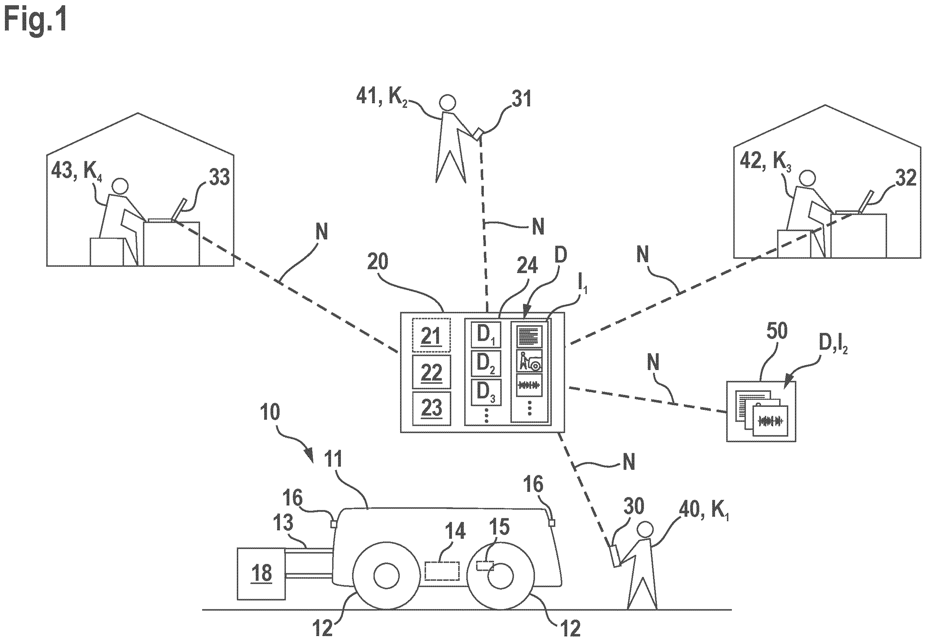

Im Folgenden wird die Erfindung anhand von Figuren beschrieben. Die Figuren sind lediglich beispielhaft und schränken den allgemeinen Erfindungsgedanken nicht ein. Es zeigt
- Fig. 1: eine schematische Darstellung, die Vorgänge bei einer Ausführungsform eines erfindungsgemäßen Verfahrens illustriert.

Fig. 1 zeigt eine Landmaschine 10, in diesem Fall ein autonomes Fahrzeug, das einen Fahrzeugkörper 11 aufweist mit einem daran angeordneten Fahrwerk 12 sowie einem Hubwerk 13, an welches unterschiedliche Anbaugeräte 18 angekoppelt werden können. Das hier rein schematisch angedeutete Anbaugerät 18 kann beispielsweise ein Mähwerk sein. Die Landmaschine 10 weist einen Antrieb 14 auf, der hier als ein einziger Block dargestellt ist, wenngleich separate Antriebseinheiten für jede der beiden Achsen des Fahrwerks 12 vorgesehen sein können sowie für eine Zapfwelle, über die das Anbaugerät angetrieben wird. Außerdem ist ein Lenksystem 15 dargestellt, über welches eine lenkbare Achse des Fahrwerks 12 einstellbar ist. Es könnten auch beide Achsen lenkbar sein. Die Landmaschine 10 weist zudem Sensoren 16 auf, die vor allem zur Erkennung des Umfelds der Landmaschine 10 dienen. Es kann sich zum Beispiel um Ultraschall-, Radar-, Lidar- und/oder Kamerasensoren handeln.

Der Landmaschine 10 ist ein Datensystem 20 zugeordnet, das ganz oder teilweise in der Landmaschine 10 selbst implementiert sein kann, aber auch ganz oder teilweise ein bezüglich der Landmaschine 10 externes System sein kann. Das Datensystem 20 weist einen Speicher 24 mit Daten D auf. Das Datensystem 20 kann außerdem verschiedene Kontrollstrukturen realisieren. Es weist eine Entscheidungseinheit 22, eine Diagnoseeinheit 23 und optional eine Störungserkennungseinheit 21 auf. Die Störungserkennungseinheit 21 - soweit vorhanden - erkennt, ob eine Betriebsstörung der Landmaschine 10 vorliegt oder ob eine solche Betriebsstörung potenziell bevorsteht. Sie kann hierzu verschiedene Betriebsparameter der einzelnen Systeme der Landmaschine 10 abfragen, zum Beispiel Drehzahlen, Drehmomente, einen Druck einer Betriebsflüssigkeit etc. Die Betriebsstörung kann auch durch eine externe Einheit automatisch erkannt werden oder durch eine Person 40-43. Wenn eine Betriebsstörung erkannt wurde, wird die Entscheidungseinheit 22 hierüber informiert, im vorliegenden Beispiel automatisch durch die Störungserkennungseinheit 21. Daraufhin entscheidet die Entscheidungseinheit 22 automatisch, welche Personen 40-43 über die Betriebsstörung zu informieren sind und auf die diesbezüglichen Daten D zugreifen dürfen. Die Entscheidung kann anhand von Daten D über die Betriebsstörung beispielsweise mittels einer Nachschlagetabelle getroffen werden oder beispielsweise mittels künstlicher Intelligenz. Dargestellt sind in dem Beispiel von Fig. 1 vier Personen 40-43, die unterschiedlichen Personenkategorien K₁-K₄ angehören. Ein Benutzer 40 gehört zu einer ersten Personenkategorie K₁ und hält sich in unmittelbarer Nähe der Landmaschine 10 auf. Über eine mobile erste Benutzerschnittstelle 30, zum Beispiel ein Tablet, kann er Daten D abrufen oder eingeben. Ein Eigentümer 41 der Landmaschine 10, der zu einer zweiten Personenkategorie K₂ gehört, hält sich nicht in der Nähe auf. Er kann über eine mobile zweite Benutzerschnittstelle 31, zum Beispiel ein Smartphone, auf Daten D zugreifen. Ein Servicemitarbeiter, der zu einer dritten Personenkategorie K₃ gehört, kann über eine dritte Benutzerschnittstelle 32, zum Beispiel einen Laptop oder Desktopcomputer, ebenfalls auf Daten D zugreifen. Schließlich kann ein Hersteller, der zu einer vierten Personenkategorie K₄ gehört, über eine vierte Benutzerschnittstelle 33, die ebenfalls ein Laptop oder Desktopcomputer sein kann, auf Daten D zugreifen. Die jeweiligen Benutzerschnittstellen 30-33 sind durch ein schematisch angedeutetes Netzwerk N, zum Beispiel das Internet, mit dem Datensystem 20 verbunden.

Im Fall einer Betriebsstörung, aber auch unabhängig hiervon, legt das Datensystem 20 fest, welche Person 40-43 auf welche Daten D zugreifen kann, und zwar in Abhängigkeit von der Personenkategorie K₁-K₄. Für jede Personenkategorie K₁-K₄ kann festgelegt werden, ob die jeweilige Person 40-43 auf Daten D insgesamt oder auf einzelne Datenkategorien D₁-D₃ zugreifen kann. Dabei kann wiederum differenziert werden zwischen einem Lesen von Daten D und einem Verändern von Daten D. Bspw. kann der Benutzer 40 Zugriff auf eine erste Datenkategorie D₁ erhalten, in welcher Ertragskarten abgelegt sind, während er keinen Zugriff auf eine zweite Datenkategorie D₂ erhält, die das Lenksystem 15 betrifft. Umgekehrt können der Hersteller 43 oder der Servicemitarbeiter 42 Zugriff auf die zweite Datenkategorie D₂ erhalten oder auf eine dritte Datenkategorie D₃, welche dem Antrieb 14 zugeordnet ist, während sie keinen Zugriff auf die erste Datenkategorie D₁ erhalten.

Die Entscheidungseinheit 22 entscheidet im vorliegenden Fall, dass alle vier Personen 40-43 Zugriff auf Daten D erhalten, durch die sie über die Betriebsstörung informiert werden. Das Datensystem 20 kann seinerseits aktiv eine Benachrichtigung an die jeweilige Benutzerschnittstelle 30-33 senden. Dabei ist zunächst nicht vorgesehen, dass der Hersteller 43 oder der Eigentümer 41 in die Beseitigung der Betriebsstörung eingebunden werden. Der Hersteller 43 erhält Daten D über die betroffene Landmaschine 10, das betroffene System und Daten D, die die Betriebsstörung näher charakterisieren, einschließlich gegebenenfalls Diagnosedaten, die von der Diagnoseeinheit 23 geliefert werden. Er kann diese Daten D für statistische Zwecke nutzen, um beispielsweise besonders störungsanfällige Komponenten zu identifizieren und diese zukünftig zu verbessern. Der Eigentümer 41 erhält Daten D, die ihn über die betroffene Landmaschine 10 und das betroffene System informieren. Ggf. kann auch er Daten D erhalten, die die Betriebsstörung näher charakterisieren. Es ist denkbar, dass er über die Verbindung mit dem Datensystem 20 auch eine Reparatur autorisieren kann.

Der Benutzer 40, der vor Ort bei der Landmaschine 10 ist, erhält Zugriff auf Daten D, die das betroffene System und die Betriebsstörung charakterisieren, er kann gegebenenfalls auch Diagnosedaten einsehen. Über seine erste Benutzerschnittstelle 30 kann er zum Beispiel auch Daten D an die Diagnoseeinheit 23 senden, woraufhin diese ihrerseits Diagnosedaten ausgibt (zum Beispiel einen Fehlercode oder dergleichen). Des Weiteren kann das Datensystem 20 in Abhängigkeit von der Betriebsstörung automatisch entscheiden, dass wenigstens eine Handlung vom Benutzer 40 vorgenommen werden kann, um der Betriebsstörung entgegenzuwirken, und kann dem Benutzer 40 Daten D zugänglich machen, durch die er über die vorzunehmende Handlung informiert wird. Dies kann in Form von Text-, Ton- und/oder Bilddaten erfolgen, die über die erste Benutzerschnittstelle 30 ausgegeben werden. Abgesehen einer konkreten Anweisung kann auch Informationsmaterial I₁, I₂ zur Verfügung gestellt werden, das im Zusammenhang mit der Betriebsstörung steht und das dem Benutzer 40 hilft, das betroffenen System zu verstehen, und zum Beispiel über bekannte Fehlerquellen informiert. Auch dieses Informationsmaterial I₁, I₂ kann in Text-, Ton- und/oder Bildform vorliegen, zum Beispiel als Podcast oder Videodatei. Dabei kann sowohl Informationsmaterial I₁ aus dem Speicher 24 des Datensystems 20, auch Informationsmaterial I₂ aus einer externen Datenbank 50 einbezogen werden, zum Beispiel einem Server, mit dem das Datensystem 20 über das Netzwerk N verbunden ist. In vielen Fällen ist der Benutzer 40 trotz der möglichen Hilfestellungen durch das Datensystem 20 nicht in der Lage, die Betriebsstörung allein zu beseitigen. Dies kann insbesondere mit seiner im Allgemeinen unzureichenden Vertrautheit mit den Systemen der Landmaschine 10 zusammenhängen. Aufgrund dieser fehlenden Kenntnisse verhindert das Dateisystem 20 auch, dass er beispielsweise Daten D betreffend das Lenksystem 13 oder den Antrieb 14 verändern kann, also Daten D aus der zweiten Datenkategorie D₂ oder der dritten Datenkategorie D₃. Er hat hierauf allenfalls Lesezugriff.

Um den Benutzer 40 zu unterstützen oder ihm die weitere Analyse und Beseitigung der Betriebsstörung vollständig abzunehmen, informiert das Datensystem 20 auch den Servicemitarbeiter 42. Dieser erhält Zugriff auf Daten D, die das betroffene System und die Betriebsstörung charakterisieren. Insbesondere kann er über seine dritte Benutzerschnittstelle 32 eine Anfrage an die Diagnoseeinheit 23 richten, woraufhin diese ihm Diagnosedaten zur Verfügung stellt. Durch diese Diagnosedaten kann er sich beispielweise auf eine bevorstehende Reparatur vorbereiten. Er kann sich außerdem auch mit dem Benutzer 30 abstimmen, zum Beispiel Rückfragen an diesen richten oder ihm Anweisungen geben. Die entsprechende Kommunikation kann auf dem Weg über das Datensystem 20 erfolgen, das hierfür eine Chat-, Sprach- und/oder Videokommunikation ermöglichen kann. Die Kommunikation kann allerdings auch unabhängig vom Datensystem 20 erfolgen, zum Beispiel über einen Sprach- oder Videoanruf zwischen der ersten Benutzerschnittstelle 30 und der dritten Benutzerschnittstelle 32. Auch der Servicemitarbeiter 42 kann auf internes Informationsmaterial I₁ des Datensystems 20 zugreifen, ebenso wie auf Informationsmaterial I₂ von der externen Datenbank 50. Da der Servicemitarbeiter 42 über bessere einschlägige Kenntnisse verfügt als der Benutzer 40, ermöglicht ihm das Datensystem 20, Daten D aus der zweiten Datenkategorie D₂ und der dritten Datenkategorie D₃ sowohl zu lesen als auch zu bearbeiten. Allerdings kann er Daten D aus der ersten Datenkategorie D₁, welche die Ertragskarten enthält, weder lesen noch bearbeiten. Diese Daten, die die Ertragskarten betreffen, sind für seine Aufgabe irrelevant und werden ihm aus Datenschutzgründen nicht offengelegt.

## Patentansprüche

1. Verfahren zur Datenbehandlung betreffend eine Landmaschine (10), wobei über wenigstens eine Benutzerschnittstelle (30-33) ein Zugriff auf Daten (D) ermöglicht wird, die im Zusammenhang mit dem Betrieb der Landmaschine (10) stehen,
**dadurch gekennzeichnet, dass**
ein Datensystem (20) automatisch personenspezifisch festlegt, welcher Zugriff einer Person (40-43) ermöglicht wird.

2. Verfahren nach Anspruch 1, **dadurch gekennzeichnet, dass** die Landmaschine (10) ein autonomes Fahrzeug ist.

3. Verfahren nach einem der vorangehenden Ansprüche, **dadurch gekennzeichnet, dass** das Datensystem (20) in Abhängigkeit von der Zugehörigkeit einer Person (40-43) zu einer definierten Personenkategorie (K₁-K₄) festlegt, welcher Zugriff dieser Person (40-43) ermöglicht wird.

4. Verfahren nach einem der vorangehenden Ansprüche, **dadurch gekennzeichnet, dass** hinsichtlich der definierten Personenkategorien (K₁-K₄) zwischen Benutzer, Eigentümer, Hersteller und/oder Servicemitarbeiter unterschieden wird.

5. Verfahren nach einem der vorangehenden Ansprüche, **dadurch gekennzeichnet, dass** einer Person (40-43) in Abhängigkeit von ihrer Personenkategorie (K₁-K₄) ein Zugriff auf unterschiedliche Datenkategorien (D₁-D₃) ermöglicht wird.

6. Verfahren nach einem der vorangehenden Ansprüche, **dadurch gekennzeichnet, dass** einer Person (40-43) ein Auslesen von Daten (D) und/oder ein Bearbeiten von Daten (D) in Abhängigkeit von ihrer Personenkategorie (K₁-K₄) ermöglicht wird.

7. Verfahren nach einem der vorangehenden Ansprüche, **dadurch gekennzeichnet, dass** eine zumindest potenziell bevorstehende Betriebsstörung der Landmaschine (10) erkannt wird, eine Entscheidungseinheit (22) des Datensystems (20) automatisch eine Entscheidung trifft, welche Person (40-43) über die Betriebsstörung informiert werden muss, und der Person (40-43) automatisch Daten (D) zugänglich macht, durch welche sie über die Betriebsstörung informiert wird.

8. Verfahren nach einem der vorangehenden Ansprüche, **dadurch gekennzeichnet, dass** die Entscheidung durch eine auf der Landmaschine (10) implementierte Entscheidungseinheit (22) getroffen wird oder durch eine bezüglich der Landmaschine (10) externe Entscheidungseinheit (22).

9. Verfahren nach einem der vorangehenden Ansprüche, **dadurch gekennzeichnet, dass** die zumindest potenziell bevorstehende Betriebsstörung automatisch durch eine Störungserkennungseinheit (22) der Landmaschine (10), automatisch durch ein bezüglich der Landmaschine (10) externe Störungserkennungseinheit (22) oder durch eine Person (40-43) erkannt wird.

10. Verfahren nach einem der vorangehenden Ansprüche, **dadurch gekennzeichnet, dass** das Datensystem (20) in Abhängigkeit von der Betriebsstörung automatisch entscheidet, dass wenigstens eine Handlung von der Person (40-43) vorzunehmen ist, um der Betriebsstörung entgegenzuwirken, und der Person (40-43) Daten (D) zugänglich macht, durch die sie über die vorzunehmende Handlung informiert wird.

11. Verfahren nach einem der vorangehenden Ansprüche, **dadurch gekennzeichnet, dass** das Datensystem (20) der Person (40-43) auf die Betriebsstörung abgestimmtes Informationsmaterial (I₁, I₂) zugänglich macht.

12. Verfahren nach einem der vorangehenden Ansprüche, **dadurch gekennzeichnet, dass** Informationsmaterial (I₁, I₂) aus einer bezüglich des Datensystems (20) externen Datenbank (50) zugänglich gemacht wird.

13. Verfahren nach einem der vorangehenden Ansprüche, **dadurch gekennzeichnet, dass** einer Person (40-43) ein Fernzugriff auf die Daten (D) ermöglicht wird.

14. Verfahren nach einem der vorangehenden Ansprüche, **dadurch gekennzeichnet, dass** bei einer zumindest potenziell bevorstehenden Betriebsstörung wenigstens zwei Personen (40-43) unterschiedlicher Personenkategorien (K₁-K₄) Zugriff auf Daten (D) ermöglicht wird, wobei wenigstens eine der Personen (40-43) über einen Fernzugriff auf die Daten (D) zugreift.

15. Datensystem (20) zur Datenbehandlung betreffend eine Landmaschine (10), welches Datensystem (20) dazu eingerichtet ist, über wenigstens eine Benutzerschnittstelle (30-33) einen Zugriff auf Daten (D) zu ermöglichen, die im Zusammenhang mit dem Betrieb der Landmaschine (10) stehen,
**dadurch gekennzeichnet, dass**
das Datensystem (20) dazu eingerichtet ist, den Zugriff personenspezifisch zu ermöglichen.

16. Landmaschine (10) mit einem Datensystem (20), welches dazu eingerichtet ist, über wenigstens eine Benutzerschnittstelle (30-33) einen Zugriff auf Daten (D) zu ermöglichen, die im Zusammenhang mit dem Betrieb der Landmaschine (10) stehen,
**dadurch gekennzeichnet, dass**
das Datensystem (20) dazu eingerichtet ist, den Zugriff personenspezifisch zu ermöglichen.
